# EUROPÄISCHE PATENTANMELDUNG

(11) **EP 1 145 878 A2**
(43) Veröffentlichungstag der Anmeldung: **17.10.2001**
(21) Anmeldenummer: 01108573.5
(22) Anmeldetag: 05.04.2001
(51) Int. Cl.: B60G 11/46

(54) **Achsaufhängung für eine luftgefederte Fahrzeugachse**

(30) Priorität: 13.04.2000 DE 10018315
(71) Anmelder: BPW Bergische Achsen Kommanditgesellschaft, 51674 Wiehl (DE)
(72) Erfinder: Habersatter, Rupert, Dipl.-Ing., 51674 Wiehl (DE); Kopplow, Hans-Werner, Dipl.-Ing., 51588 Nümbrecht (DE); Ebert, Jörg, Dr., 50858 Köln (DE)
(74) Vertreter: Stenger, Watzke & Ring Patentanwälte

(57) **Zusammenfassung**

Vorgeschlagen wird eine Achsaufhängung für eine luftgefederte Fahrzeugachse, deren Achskörper an zu beiden Seiten des Fahrzeugs angeordneten Lenkerfedern (2) befestigt ist. Das eine Ende der Lenkerfedern ist vorzugsweise über eine Konsole (4) verschwenkbar am Fahrzeugrahmen (6) angelenkt, während das andere Ende über eine Luftfeder (5) gegenüber dem Fahrzeugrahmen abgestützt ist. Um ein materialschonenderes Belastungsverhalten im Bereich der Verbindung zwischen Lenkerfeder und Achskörper zu erzielen, sind Achskörper (1) und Lenkerfeder (2) über mindestens einen Bolzen (11) miteinander verbunden. Der Bolzen (11) durchsetzt zugleich den Achskörper (1) oder starr daran befestigte Teile und eine Bohrung der Lenkerfeder (2).

## Beschreibung

Die Erfindung betrifft eine Achsaufhängung für eine luftgefederte Fahrzeugachse, deren Achskörper an zu beiden Seiten des Fahrzeugs angeordneten Lenkerfedern befestigt ist, deren eines Ende, vorzugsweise über eine Konsole, verschwenkbar am Fahrzeugrahmen angelenkt ist und deren anderes Ende über eine Luftfeder gegenüber dem Fahrzeugrahmen abgestützt ist.

Eine solche Achsaufhängung ist z. B. aus der EP 0 431 673 B1 bekannt. Der Längslenker der darin beschriebenen und dargestellten Achsaufhängung ist eine sogenannte Lenkerfeder, die sich, etwa in Abgrenzung zu sogenannten Kastenlenkern, durch ein gewisses Eigenfederungsverhalten auszeichnet. Das dynamische Verhalten der Achsaufhängung wird daher nicht nur durch die Luftfederbälge der Luftfederung bestimmt, sondern auch durch das elastische Verformungsverhalten der Lenkerfeder. Zur Erzielung dieser Eigenschaften bestehen Lenkerfedern aus Federstahl.

Hingewiesen wird in der EP 0 431 673 B1 auf die Empfindlichkeit derartiger Lenkerfedern gegen deren Oberfläche oder Struktur schädigende Befestigungen, etwa durch Anbringung von Löchern in der Lenkerfeder. Vor diesem Hintergrund erfolgt die Befestigung des Achskörpers an den Lenkerfedern in der auch im übrigen weit verbreiteten Befestigungstechnik unter Verwendung von Bügeln, die sowohl den Achskörper, als auch die jeweilige Lenkerfeder umgreifen und diese Teile im wesentlichen reibschlüssig miteinander verspannen.

Die im Fahrbetrieb vor allem in der Lenkerfeder auftretenden Biegekräfte führen zu hohen Zugbelastungen dieser Bügelkonstruktion. Insbesondere die zur Verschraubung der Bügel verwendeten Muttern sind einer hohen Wechselbelastung ausgesetzt.

Der Erfindung liegt daher die **Aufgabe** zugrunde, eine Achsaufhängung für eine luftgefederte Fahrzeugachse mit einer günstigeren Belastungssituation in der Verbindung zwischen Achskörper und Lenkerfeder zu schaffen.

Zur **Lösung** dieser Aufgabe wird bei einer Achsaufhängung mit den eingangs genannten Merkmalen vorgeschlagen, daß Achskörper und Lenkerfeder über mindestens einen Bolzen miteinander verbunden sind, der zugleich den Achskörper oder starr daran befestigte Teile und eine Bohrung der Lenkerfeder durchsetzt.

Es entsteht auf diese Weise eine formschlüssige Anbindung des Achskörpers an die jeweilige Lenkerfeder, wozu mindestens ein Bolzen zugleich den Achskörper oder starr daran befestigte Teile und eine Bohrung der Lenkerfeder durchsetzt. Dies führt zu einer günstigen Belastungssituation in der Verbindung zwischen Achskörper und Lenkerfeder, da die im Fahrbetrieb in der Lenkerfeder wirkenden Biege- und teilweise auch Torsionskräfte unter Vermeidung zu hoher Druckbelastungen in den Achskörper abgeführt werden.

Zur weiteren Reduzierung der dynamischen Belastungen vor allem auf die Bolzenachse wird mit einer bevorzugten Ausgestaltung vorgeschlagen, daß die Bolzenachse in der durch die Lenkerfedern und den Achskörper aufgespannten oder in einer dazu parallelen Ebene angeordnet ist. Hierzu ist es ferner von Vorteil, wenn sich die Bolzenachse parallel zu dem Achskörper erstreckt.

Bei dem Bolzen handelt es sich vorzugsweise um einen mit mindestens einer Gewindemutter gesicherten Schraubbolzen.

Gemäß einer Ausführungsform der Erfindung ist der Achskörper mit mindestens einem starr daran befestigten Verbindungselement versehen, welches eine sich quer zu dem Achskörper erstreckende Seitenwand aufweist, an der sich die Lenkerfeder seitlich abstützt, wobei der Bolzen zugleich die Seitenwand des Verbindungselements und eine Querbohrung der Lenkerfeder durchsetzt. Als Verbindungselemente kommen vorzugsweise mit dem Achskörper verschweißte und mit mindestens einem Loch für den Durchtritt des Bolzens versehene Flansche zum Einsatz. Durch das Verschweißen der Flansche mit dem Achskörper läßt sich eine vorgefertigte Baueinheit herstellen, die sich später mit nur geringem Montageaufwand mittels des mindestens einen Bolzens an den Lenkerfedern befestigen läßt.

Damit diese Befestigung einfach bei zugleich guter Formstabilität durchgeführt werden kann, ist mit einer weiteren Ausgestaltung der Erfindung vorgesehen, daß der Flansch den Achskörper an zwei einander abgewandten Seiten mit einer an die Querschnittskontur des Achskörpers angeglichenen Ausnehmung umgreift, und daß sich die Flansch und Achskörper verbindende Schweißnaht entlang der Ausnehmung erstreckt.

Bei einer bevorzugten Ausführungsform der erfindungsgemäßen Achsaufhängung ist der Achskörper mit insgesamt zwei Flanschen als Verbindungselemente versehen, zwischen deren einander zugewandten Seitenwänden die Lenkerfeder hindurchgeführt ist. Vorzugsweise ist jeder der beiden Flansche mit einer den Achskörper vollständig umgebenden Ausnehmung versehen.

Ferner wird zur Erzielung eines gewissen Formschlusses zwischen der Lenkerfeder und dem flanschförmigen Verbindungselement vorgeschlagen, daß die Lenkerfeder um die Öffnung der Querbohrung für den Bolzen herum mit vorzugsweise ringförmig angeordneten Vorsprüngen versehen ist, an denen sich der Flansch abstützt.

Bei einer Ausführungsform der erfindungsgemäßen Achsaufhängung ist das Verbindungselement mit einer zwischen dem Achskörper und der Lenkerfeder angeordneten Stützfläche versehen, an der sich die Lenkerfeder mit einer ihrer beiden horizontalen Flachseiten abstützt. In diesem Fall kann das Verbindungselement mit einer starr an der Seitenwand befestigten Querstrebe versehen sein, an der sich die Lenkerfeder mit der anderen ihrer beiden horizontalen Flachseiten abstützt.

Wenn sich außerdem die Querstrebe in Fahrtrichtung weiter vorne an dem Verbindungselement befindet, als der die Lenkerfeder durchdringende Bolzen, werden die vom Achskörper während eines Bremsvorgangs auf die Lenkerfeder übertragenen Drehmomente günstig von der Lenkerfeder aufgenommen.

Bei einer anderen Ausführungsform durchdringt das Verbindungselement mit zwei Bolzen zwei hintereinander in der Lenkerfeder angeordnete Querbohrungen.

Eine weitere Ausgestaltung der Achsaufhängung ist gekennzeichnet durch eine in Längsrichtung zweigeteilte Lenkerfeder, wobei sich die von dem Bolzen durchsetzte Bohrung in dem vorderen Abschnitt der Lenkerfeder befindet, und sich an dem hinteren Abschnitt der Lenkerfeder die Luftfeder abstützt.

Schließlich wird mit der Erfindung vorgeschlagen, daß an dem Verbindungselement ein Anlenkpunkt für einen Stoßdämpfer befestigt ist. Hiermit verbunden ist eine bauliche Vereinfachung mit reduzierter Teilezahl.

Weitere Einzelheiten werden nachfolgend anhand von mehreren auf den zugehörigen Zeichnungen dargestellten Ausführungsbeispielen erläutert. Darin zeigen:
- Fig. 1: in Seitenansicht eine Achsaufhängung für eine luftgefederte Fahrzeugachse;
- Fig. 2: eine Draufsicht auf die Achsaufhängung nach Fig. 1;
- Fig. 3: in Seitenansicht eine zweite Ausführungsform einer Achsaufhängung;
- Fig. 4: die Achsaufhängung nach Fig. 3 in Draufsicht;
- Fig. 5: in Seitenansicht eine dritte Ausführungsform einer Achsaufhängung;
- Fig. 6: die Achsaufhängung nach Fig. 5 in einer Draufsicht;
- Fig. 7: in perspektivischer, teilweise geschnittener Darstellung eine vierte Ausführungsform einer Achsaufhängung;
- Fig. 8: in einer Explosionsdarstellung Einzelheiten der Achsaufhängung nach Figur 7;
- Fig. 9: in Seitenansicht eine fünfte Ausführungsform einer Achsaufhängung;
- Fig. 10: in Seitenansicht eine sechste Ausführungsform einer Achsaufhängung;
- Fig. 11: in Seitenansicht eine siebte Ausführungsform einer Achsaufhängung;
- Fig. 12: in Seitenansicht eine achte Ausführungsform einer Achsaufhängung und
- Fig. 13: die Achsaufhängung nach Fig. 12 in einer Draufsicht.

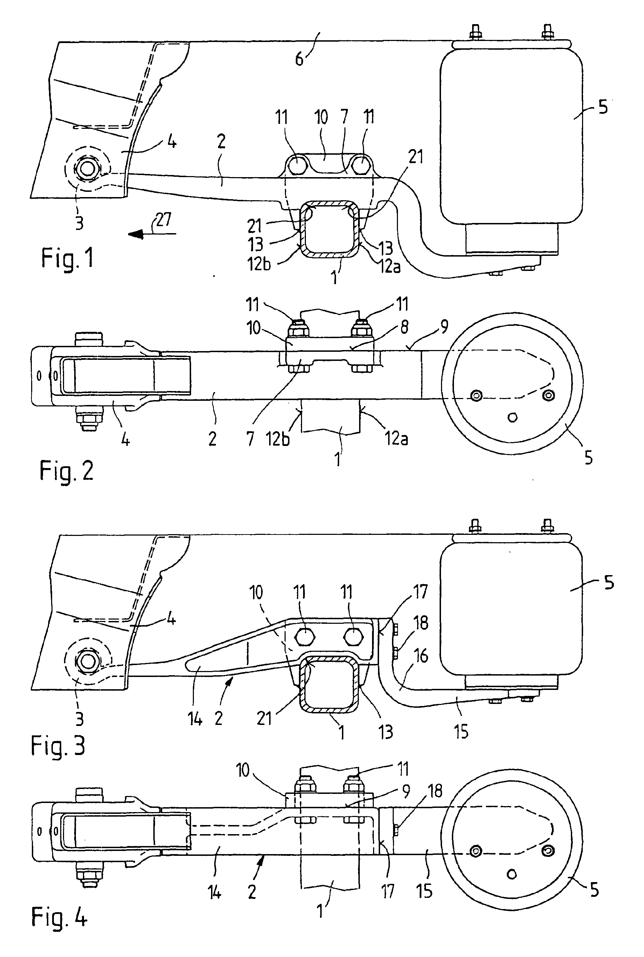

Die Fign. 1 und 2 zeigen in Seitenansicht sowie Draufsicht eine luftgefederte Fahrzeugachse mit einem Achskörper 1 in Gestalt eines Rechteckrohres, der im Bereich seiner beiden Enden jeweils an einer Lenkerfeder 2 in nachfolgend noch näher beschriebenen Weise befestigt ist. Die Lenkerfeder 2 besteht aus geschmiedetem Federstahl und ist an ihrem vorderen Ende mit einem Auge 3 versehen, welches gelenkig an einer fahrgestellfesten Konsole 4 gelagert ist. An ihrem hinteren Ende stützt sich die Lenkerfeder 2 über eine Luftfeder 5 in Gestalt eines Luftfederbalgs von unten an dem Längsträger 6 des Fahrzeuganhängers ab. Nicht dargestellt ist der am Ende des Achskörpers 1 angeformte Achsschenkel, auf dem mittels üblicher Wälzlager die Radnabe mit Fahrzeugrad und Bremse gelagert ist.

Da die sich parallel zur Fahrzeuglängsrichtung erstreckenden Lenkerfedern 2 aus Federstahl bestehen, weisen sie in gewissen Grenzen ein elastisches Eigenverhalten auf. Die Lenkerfeder 2 kann langgestreckt geformt sein oder, wie dies Fig. 1 erkennen läßt, doppelt gekröpft. Der Achskörper 1 kann sich unterhalb der Lenkerfeder 2 befinden, wie dies auf der Zeichnung dargestellt ist, oder auch oberhalb.

Einstückig am Material der Lenkerfeder 2 angeformt ist ein kurzer Verbindungsflansch 7 mit zwei Durchgangsbohrungen. Die Außenseite 8 des Verbindungsflansches 7 schließt ungefähr mit der entsprechenden Seitenfläche 9 der Lenkerfeder ab. Ein weiterer Flansch 10 in Gestalt eines Flanschbleches, welches mit dem Achskörper 1 verschweißt ist, stützt sich gegen die Außenseite 8 des Verbindungsflansches 7. Auch der Flansch 10 des Achskörpers 1 ist mit zwei Durchgangsbohrungen versehen, die mit den Durchgangsbohrungen in dem Verbindungsflansch 7 fluchten. Durch beide Bohrungen ist jeweils ein Bolzen 11, vorzugsweise ein Schraubbolzen, hindurchgesetzt. Der Flansch 10 des Achskörpers 1 stellt daher das Verbindungselement des Achskörpers 1 zu der jeweiligen Lenkerfeder 2 dar.

Fig. 1 läßt ferner erkennen, daß der Flansch 10 den Achskörper 1 an zwei einander abgewandten Seiten 12a, 12b mit einer an die Querschnittskontur des Achskörpers 1 angeglichenen Ausnehmung umgreift, und daß sich die Flansch 10 und Achskörper 1 verbindende Schweißnaht 13 entlang dieser Ausnehmung des Flansches 10 erstreckt.

Bei dem Ausführungsbeispiel nach den Fign. 3 und 4 durchragen die Bolzen 11 die Lenkerfeder 2 unmittelbar, es fehlt daher der auf der Oberseite oder der Unterseite der Lenkerfeder angeordnete Verbindungsflansch in Gestalt des Verbindungsflansches 7 der Fig. 1. Wiederum aber stützt sich der am Achskörper 1 angeschweißte Flansch 10 seitlich gegen die Seitenfläche 9 der Lenkerfeder 2 ab und ist in dieser Stellung durch die Bolzen 11 formschlüssig gesichert.

Die Lenkerfeder nach den Fign. 3 und 4 ist zweigeteilt. Der vordere Teil 14 der Lenkerfeder weist die beiden von den Bolzen 11 durchsetzten Bohrungen auf, wohingegen sich die Auflage für die Luftfeder 5 an dem hinteren Teil 15 der Lenkerfeder befindet. Der hintere Teil 15 ist an seinem vorderen Ende mit einer rechtwinkligen Abbiegung 16 versehen und stützt sich dort gegen eine vertikale Abschlußfläche 17 des vorderen Teils 14 der Lenkerfeder ab. Zur Befestigung dienen zwei sich in Fahrtrichtung erstreckende Schrauben 18, welche beide Teile der Lenkerfeder durchdringen.

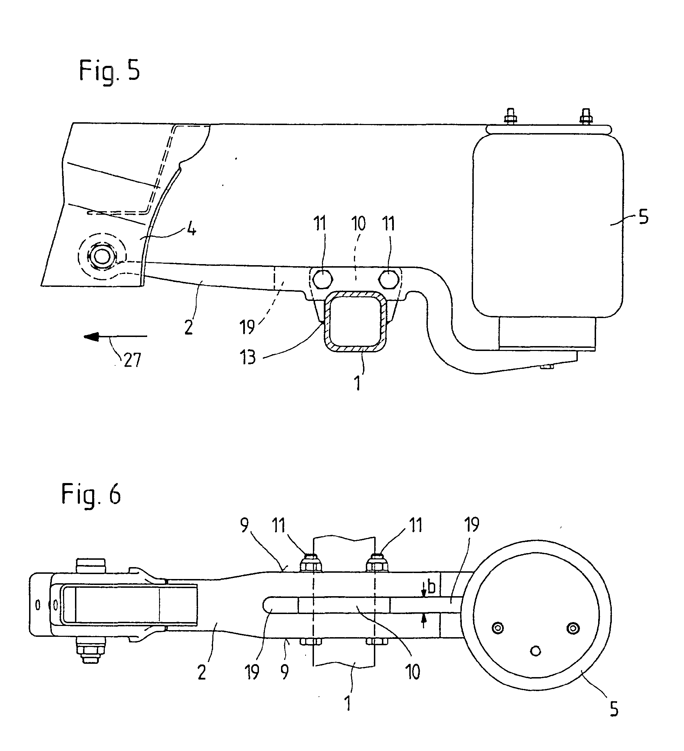

Bei der Ausführungsform nach den Fign. 5 und 6 ist die Lenkerfeder 2 mit einem Längsschlitz 19 versehen, dessen Breite b in etwa der Dicke des mit dem Achskörper 1 verschweißten Flansches 10 entspricht. Der Flansch 10 ragt also bei montierter Achskonstruktion in diesen Schlitz 19 und ist mittels der beiden Bolzen 11 gesichert. Die Bolzen 11 durchdringen im Material der Lenkerfeder 2 ausgebildete Querbohrungen und zugleich die damit fluchtenden Bohrungen in dem Flansch 10, so daß sich Schraubenkopf und Mutter der Bolzen 11 an den Seitenflächen 9 der Lenkerfeder abstützen.

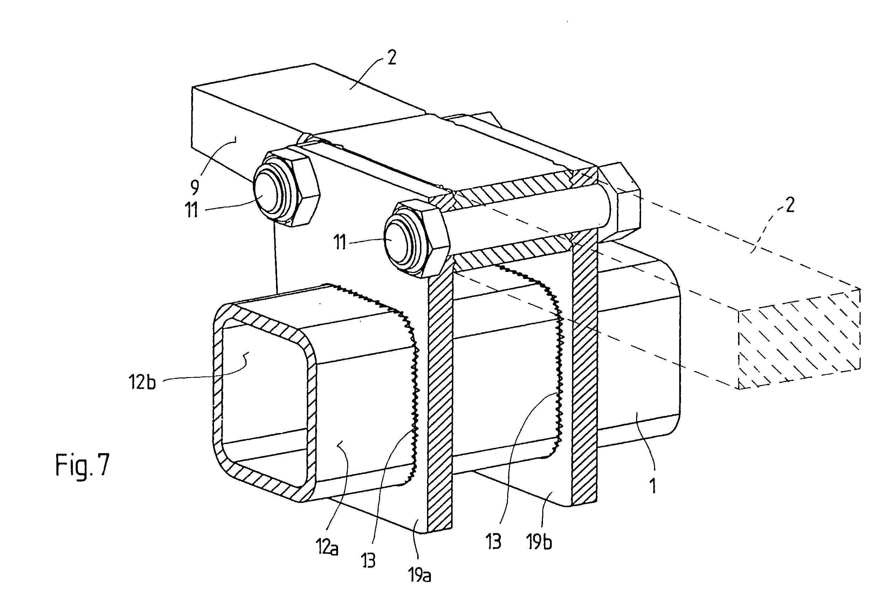

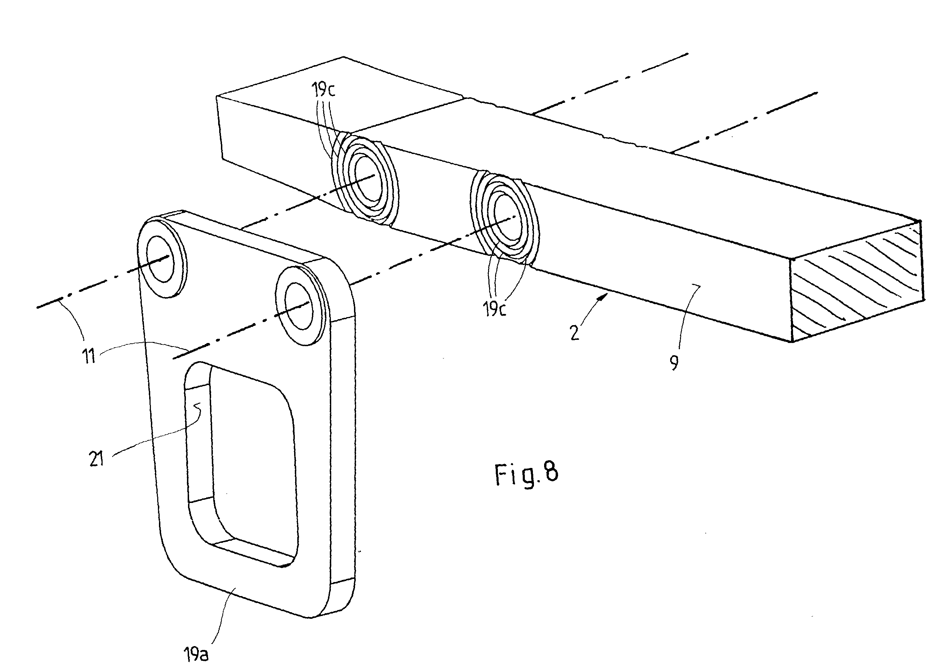

Bei der Ausführungsform nach den Figuren 7 und 8 ist die Lenkerfeder 2 zwischen Flanschen 19a, 19b hindurchgeführt, deren einander zugewandte Seitenwände sich an den Seitenflächen 9 der Lenkerfeder 2 abstützen. Jeder der beiden Flansche 19a, 19b ist mit einer den Achskörper 1 vollständig umgebenden Ausnehmung 21 versehen. Der Achskörper 1 ist mit dem Rand dieser Ausnehmung 21 entlang der Schweißnaht 13 verschweißt. Zur Erzielung eines gewissen Formschlusses zwischen der Lenkerfeder 2 und jedem der beiden Flansche 19a, 19b ist die Lenkerfeder 2 an ihren Seitenflächen 9 um die Öffnungen der Querbohrungen für die Bolzen 11 herum mit Vorsprüngen 19c versehen. Diese haben die Gestalt von ringförmig um die Öffnungen herum verlaufenden Rippen. Beim Verspannen der Flansche 19a, 19b mit der Lenkerfeder 2 infolge des Anziehens der Bolzen 11 graben sich die Vorsprünge 19c geringfügig in das Material der Flansche 19a, 19b ein, wodurch in diesem Bereich ein gewisser Formschluß zwischen den zu verbindenden Teilen erzielt wird. Im übrigen sind auch bei der Ausführungsform nach den Figuren 7 und 8, ebenso wie bei den übrigen bisher beschriebenen Ausführungsformen nach den Figuren 1 bis 5, insgesamt zwei Bolzen vorgesehen, welche die Lenkerfeder 2 quer durchdringen.

Während bei den Ausführungsformen nach den voranstehend beschriebenen Fign. 1 bis 8 jeweils der mit dem Achskörper 1 starr verbundene Flansch 10 das entscheidende Verbindungselement zwischen Achskörper und Lenkerfeder bildet, besteht das Verbindungselement bei den nachfolgend beschriebenen Ausführungsformen aus einem geschmiedeten, dreidimensional gestalteten Formkörper.

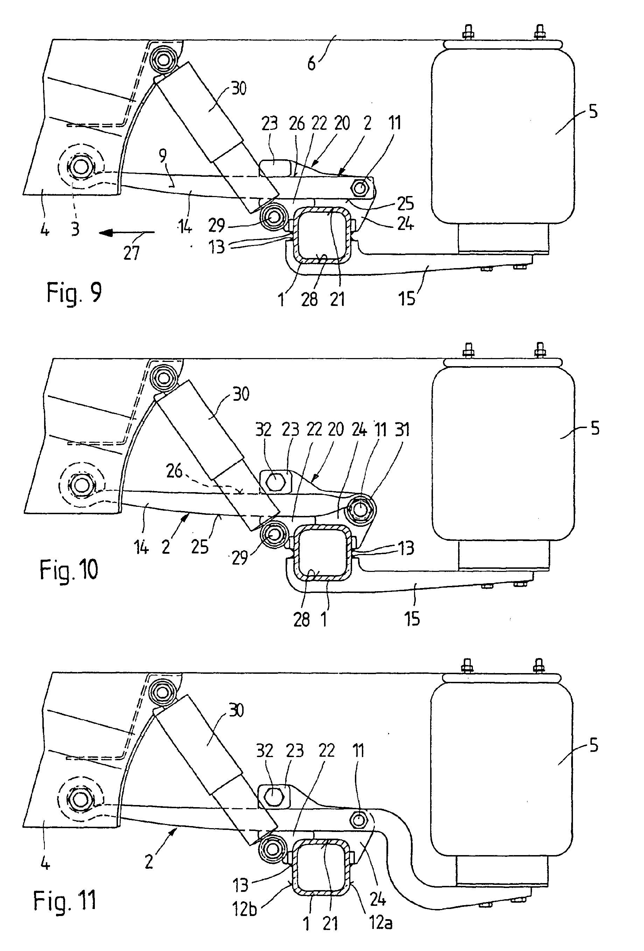

Bei der ersten dieser Ausführungsformen gemäß Fig. 9 besteht das einstückig gestaltete Verbindungselement 20 aus einer den Achskörper 1 teilweise umgreifenden und mit diesem verschweißten Ausnehmung 21, einer Stützfläche 22 und einer Querstrebe 23. Ferner verfügt das Verbindungselement 20 über eine Seitenwand 24, die sich an einer der beiden Seitenflächen 9 der Lenkerfeder 2 abstützt und zu dieser parallel verläuft. Die Seitenwand 24 befindet sich beim Ausführungsbeispiel nur auf der einen Seite der Lenkerfeder. Jedoch kann sich eine entsprechend gestaltete Seitenwand auch auf der anderen, in der Bildebene weiter oben liegenden Seite der Lenkerfeder befinden und dort ebenfalls an der Seitenfläche 9 der Lenkerfeder anliegen. Auf diese Weise wäre die Lenkerfeder 2 zwischen den beiden zueinander parallelen Seitenwänden 24 eingeschlossen.

Auch die Seitenwand 24 ist einstückiger Bestandteil des Verbindungselements 20. Sie verbindet auf diese Weise die Querstrebe 23 mit der Stützfläche 22, außerdem ist auch die Ausnehmung 21 für den Achskörper in der insoweit flanschförmig gestalteten Seitenwand 24 ausgeformt.

Fig. 9 läßt erkennen, daß sich die Stützfläche 22 des Verbindungselements 20 zwischen Achskörper 1 und Lenkerfeder 2 befindet. Die Lenkerfeder 2 stützt sich mit ihrer Unterseite 25 auf dieser Stützfläche 22 ab, weshalb die Stützfläche 22 in Fahrzeugquerrichtung mindestens so breit ist, wie die Lenkerfeder 2 bzw. deren Unterseite 25. Die Querstrebe 23 stützt sich demgegenüber auf der Oberseite 26 der Lenkerfeder ab und weist hierzu ebenfalls mindestens die Breite der Lenkerfeder 2 auf. In Bezug auf die flanschartige Seitenwand 24 kragt die Querstrebe 23 daher über den Querschnitt der Lenkerfeder. Die Lenkerfeder 2 ist daher mit geringem Spiel zwischen Stützfläche 22 und Querstrebe 23 hindurchgeführt, so daß in diesem Bereich keine Axialbewegungen der Lenkerfeder möglich sind. Ferner ist die Lenkerfeder 2 mittels des Bolzens 11 an dem Verbindungselement 20 befestigt. Der Bolzen 11 durchdringt sowohl eine Querbohrung der Lenkerfeder, als auch eine damit fluchtende Querbohrung in der Seitenwand 24. In Fahrtrichtung 27 befindet sich die Querstrebe 23 weiter vorne an dem Verbindungselement 20, als der die Querbohrung der Lenkerfeder 2 durchdringende Bolzen 11.

Die Lenkerfeder 2 nach Fig. 9 ist zweigeteilt, wobei ihr hinterer Teil 15 über eine daran ausgebildete U-förmige Ausnehmung 28 mit dem Achskörper 1 verschweißt ist. Diese Verschweißung liegt in Bezug auf den Achskörper 1 der Verschweißung des Verbindungselements 20 mit dem Achskörper 1 gegenüber.

Schließlich ist das Verbindungselement 20 mit einem Zapfen 29 versehen, der der Anlenkung eines Stoßdämpfers 30 dient, der sich mit seinem anderen Ende an der Konsole 4 abstützt.

Die Ausführungsform nach Fig. 10 weicht in zwei Einzelheiten von der Ausführungsform nach Fig. 9 ab. Der vordere Teil 14 der Lenkerfeder ist nicht nur mit dem vorderen Auge 3 zur gelenkigen Verbindung mit der Konsole 4, sondern auch an seinem hinteren Ende mit einem Auge 31 versehen. Durch dieses Auge 31 und die Seitenwand 24 des Verbindungselements 20 ist der Bolzen 11 hindurchgeführt.

In weiterer Abweichung zu Fig. 9 ist die Querstrebe 23 nicht einstückiger Bestandteil des Verbindungselements 20, sondern die Strebe 23 ist über eine Schraube 32 lösbar an der Seitenwand 24 befestigt. Dies erleichtert die Montage im Hinblick des eine Verdickung der Lenkerfeder darstellenden, hinteren Auges 31.

Die Ausführungsform nach Fig. 11 unterscheidet sich von der Ausführungsform nach Fig. 10 durch die einstückige Gestaltung der Lenkerfeder 2 zwischen Konsole 4 und Luftfeder 5. Für den Bolzen 11 ist wiederum eine sich quer zur Fahrtrichtung erstreckende Bohrung im Material der Lenkerfeder 2 vorgesehen.

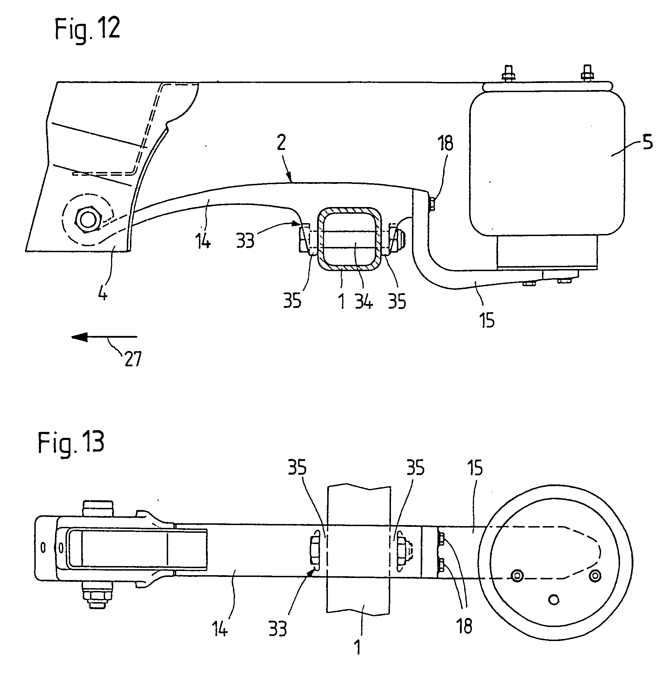

Bei der Ausführungsform nach den Fign. 12 und 13 ist die hier wieder zweiteilig gestaltete Lenkerfeder 2 mit einer daran angeformten Klaue 33 versehen. Die durch die Klaue 33 gebildete Ausnehmung umgreift den Achskörper 1 U-förmig und damit auf einem Teil seines Umfangs. Als Verbindungselement dient ein Schraubbolzen 34, der beide Schenkel 35 der Klaue 33 sowie den Achskörper 1 durchdringt. Hierzu ist der Achskörper 1 mit zwei einander gegenüberliegenden Löchern versehen, die ferner mit den Löchern in den Schenkeln 35 fluchten. Der Schraubbolzen 34 erstreckt sich in Fahrzeuglängsrichtung 27.

### Bezugszeichenliste

- 1: Achskörper
- 2: Lenkerfeder
- 3: Auge
- 4: Konsole
- 5: Luftfeder
- 6: Längsträger
- 7: Verbindungsflansch
- 8: Außenseite
- 9: Seitenfläche der Lenkerfeder
- 10: Flansch
- 11: Bolzen
- 12a: Seite des Achskörpers
- 12b: Seite des Achskörpers
- 13: Schweißnaht
- 14: vorderes Teil der Lenkerfeder
- 15: hinteres Teil der Lenkerfeder
- 16: Abbiegung
- 17: hintere Abschlußfläche
- 18: Schraube
- 19: Längsschlitz
- 19a: Seitenflansch
- 19b: Seitenflansch
- 19c: Vorsprünge
- 20: Verbindungselement
- 21: Ausnehmung
- 22: Stützfläche
- 23: Querstrebe
- 24: Seitenwand
- 25: Unterseite
- 26: Oberseite
- 27: Fahrtrichtung
- 28: Ausnehmung
- 29: Zapfen
- 30: Stoßdämpfer
- 31: Auge
- 32: Schraube
- 33: Klaue
- 34: Schraubbolzen
- 35: Schenkel

- b: Breite

## Patentansprüche

1. Achsaufhängung für eine luftgefederte Fahrzeugachse, deren Achskörper an zu beiden Seiten des Fahrzeugs angeordneten Lenkerfedern (2) befestigt ist, deren eines Ende, vorzugsweise über eine Konsole (4) verschwenkbar am Fahrzeugrahmen (6) angelenkt ist und deren anderes Ende über eine Luftfeder (5) gegenüber dem Fahrzeugrahmen (6) abgestützt ist,
**dadurch gekennzeichnet,**
**daß** Achskörper (1) und Lenkerfeder (2) über mindestens einen Bolzen (11, 34) miteinander verbunden sind, der zugleich den Achskörper (1) oder starr daran befestigte Teile und eine Bohrung der Lenkerfeder (2) durchsetzt.

2. Achsaufhängung nach Anspruch 1, **dadurch gekennzeichnet, daß** die Achse des Bolzens (11, 34) in der durch die Lenkerfedern (2) und den Achskörper (1) aufgespannten oder in einer dazu parallelen Ebene angeordnet ist.

3. Achsaufhängung nach Anspruch 1 oder Anspruch 2, **dadurch gekennzeichnet, daß** sich die Achse des Bolzens (11) parallel zu dem Achskörper (1) erstreckt.

4. Achsaufhängung nach einem der Ansprüche 1 bis 3, **dadurch gekennzeichnet, daß** der Bolzen (11, 34) ein mit mindestens einer Gewindemutter gesicherter Schraubbolzen ist.

5. Achsaufhängung nach einem der Ansprüche 1 bis 4, **dadurch gekennzeichnet, daß** der Achskörper (1) mit mindestens einem starr daran befestigten Verbindungselement versehen ist, welches eine sich quer zu dem Achskörper (1) erstreckende Seitenwand (10; 19a, 19b; 24) aufweist, an der sich die Lenkerfeder (2) seitlich abstützt, und daß der Bolzen (11) zugleich die Seitenwand (10; 19a, 19b; 24) des Verbindungselements und eine Querbohrung der Lenkerfeder (2) durchsetzt.

6. Achsaufhängung nach Anspruch 5, **dadurch gekennzeichnet, daß** das Verbindungselement ein mit dem Achskörper (1) verschweißter und mit mindestens einem Loch für den Durchtritt des Bolzens (11) versehener Flansch (10; 19a, 19b; 24) ist.

7. Achsaufhängung nach Anspruch 6, **dadurch gekennzeichnet, daß** der Flansch (10; 19a, 19b; 24) den Achskörper (1) an zwei einander abgewandten Seiten (12a, 12b) mit einer an die Querschnittskontur des Achskörpers (1) angeglichenen Ausnehmung (21) umgreift, und daß sich die Flansch (10; 19a, 19b; 24) und Achskörper (1) verbindende Schweißnaht (13) entlang der Ausnehmung (21) erstreckt.

8. Achsaufhängung nach einem der Ansprüche 5 bis 7, **dadurch gekennzeichnet, daß** der Achskörper (1) mit insgesamt zwei Flanschen (19a, 19b) als Verbindungselemente versehen ist, zwischen deren einander zugewandten Seitenwänden die Lenkerfeder (2) hindurchgeführt ist.

9. Achsaufhängung nach Anspruch 8, **gekennzeichnet durch** eine den Achskörper (1) vollständig umgebende Ausnehmung (21) in jedem der beiden Flansche (19a, 19b),

10. Achsaufhängung nach einem der Ansprüche 5 bis 9, **dadurch gekennzeichnet, daß** die Lenkerfeder (2) um die Öffnung der Querbohrung für den Bolzen (11) herum mit vorzugsweise ringförmig angeordneten Vorsprüngen (19c) versehen ist, an denen sich der Flansch (19a, 19b) abstützt.

11. Achsaufhängung nach einem der Ansprüche 5 bis 7, **dadurch gekennzeichnet, daß** das Verbindungselement (20) mit einer zwischen dem Achskörper (1) und der Lenkerfeder (2) angeordneten Stützfläche (22) versehen ist, an der sich die Lenkerfeder (2) mit einer ihrer beiden horizontalen Flachseiten (25) abstützt.

12. Achsaufhängung nach Anspruch 11, **dadurch gekennzeichnet, daß** Stützfläche (22) und Seitenwand (24) rechtwinklig zueinander liegen.

13. Achsaufhängung nach Anspruch 11 oder Anspruch 12, **dadurch gekennzeichnet, daß** das Verbindungselement (20) mit einer starr an der Seitenwand (24) befestigten Querstrebe (23) versehen ist, an der sich die Lenkerfeder (2) mit der anderen ihrer beiden horizontalen Flachseiten (26) abstützt.

14. Achsaufhängung nach Anspruch 13, **dadurch gekennzeichnet, daß** sich die Querstrebe (23) in Fahrtrichtung (27) weiter vorne an dem Verbindungselement' (20) befindet, als der die Lenkerfeder (2) durchdringende Bolzen (11).

15. Achsaufhängung nach einem der Ansprüche 5 bis 11, **dadurch gekennzeichnet, daß** das Verbindungselement mit zwei Bolzen (11) zwei hintereinander in der Lenkerfeder angeordnete Querbohrungen durchdringt.

16. Achsaufhängung nach einem der vorangehenden Ansprüche, **gekennzeichnet durch** eine in Längsrichtung zweigeteilte Lenkerfeder, wobei sich die von dem Bolzen (11) durchsetzte Bohrung in dem vorderen Teil (14) der Lenkerfeder befindet, und sich an dem hinteren Teil (15) der Lenkerfeder die Luftfeder (5) abstützt.

17. Achsaufhängung nach einem der Ansprüche 5 bis 16, **dadurch gekennzeichnet, daß** an dem Verbindungselement (20) ein Anlenkpunkt (29) für einen Stoßdämpfer (30) befestigt ist.
